(19) Europäisches Patentamt
European Patent Office
Office européen des brevets

(11) EP 3 712 808 A1

(12) EUROPEAN PATENT APPLICATION

(43) Date of publication:
23.09.2020 Bulletin 2020/39

(51) Int Cl.:
G06K 9/00 (2006.01)       G06K 9/46 (2006.01)
G06K 9/62 (2006.01)

(21) Application number: 20163864.0

(22) Date of filing: 18.03.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.03.2019 US 201916357047

(71) Applicant: Nvidia Corporation
Santa Clara, CA 95051 (US)

(72) Inventors:
• YANG, Xiaodong
  Santa Clara, CA 95051 (US)
• ZHENG, Zhedong
  Santa Clara, CA 95051 (US)
• YU, Zhiding
  Santa Clara, CA 95051 (US)

(74) Representative: Kraus & Weisert
Patentanwälte PartGmbB
Thomas-Wimmer-Ring 15
80539 München (DE)

(54) IMAGE IDENTIFICATION USING NEURAL NETWORKS

(57)     A neural network is trained to perform a re-identification task in which it is determined whether one or more features present in a first image appear also in a second image. During training, a generative portion of one or more neural networks generates variations of an input image, and a discriminative portion of the one or more neural networks learns to perform the re-identification task based at least in part on the variations of the image. During training, the generative and discriminative portions of the one or more neural networks share an encoder which encodes information used by the generative and discriminative portions.

FIG. 1

**Description**

BACKGROUND

Re-identification involves the task of establishing correspondence between entities depicted across different images. For example, a person depicted in an image captured by one camera might or might not be the same individual captured in an image captured by another camera. The re-identification task remains challenging, even in view of existing neural network techniques, for a variety of reasons. These may include differences such as those caused by camera angles, lighting, and so forth. Moreover, differences such as body pose, image resolution, and background may further compound the difficulty of performing re-identification.

BRIEF DESCRIPTION OF THE DRAWINGS

Various techniques will be described with reference to the drawings, in which:

FIG. 1 illustrates an example re-identification system, in accordance with an embodiment;

FIG. 2 illustrates an example of training a neural network for re-identification, in accordance with an embodiment;

FIG. 3 illustrates training a neural network for performing re-identification, in accordance with an embodiment;

FIG. 4 illustrates aspects of self-identity generation in a generative portion of a neural network, in accordance with an embodiment;

FIG. 5 illustrates aspects of cross-identity generation in a generative portion of a neural network, in accordance with an embodiment;

FIG. 6 illustrates complementary features learned by a discriminative portion of a neural network, in accordance with an embodiment;

FIG. 7 illustrates an example of parallel processing unit ("PPU"), in accordance with an embodiment;

FIG. 8 illustrates an example of a general processing cluster ("GPC"), in accordance with one embodiment;

FIG. 9 illustrates an example of a memory partition unit, in accordance with one embodiment;

FIG. 10 illustrates an example of a streaming multi-processor, in accordance with one embodiment; and

FIG. 11 illustrates a computer system in which the various examples can be implemented, in accordance with one embodiment.

DETAILED DESCRIPTION

Embodiments disclosed herein include systems, methods, and computer program products related to detecting whether a feature that appear in an image also appear in a second image. Here, a feature refers to a person, entity, or object that may be depicted in the image. In an example embodiment, a processor comprises one or more arithmetic logic units (ALUs) that determine whether a feature appears in both a first and second image. The processor and its associated ALUs make the determination based, at least in part, on one or more neural networks that include a discriminative portion (an encoder portion and two small headers) that encodes information for use by the discriminative portion. During training, the one or more neural networks comprises a generative portion which shares the encoder with the discriminative portion.

In an embodiment, the generative portion generates image data during training. The generated image data comprises various generated representations of the feature being re-identified, in which each variation changes the appearance of the feature in some way. This approach may permit the neural network to learn to recognize fine-grained aspects of the features being analyzed. In an embodiment, the feature is an individual person whose appears in at least the first image, and whose presence in the second image is confirmed by the processor and its ALUs. The generative portion is jointly trained with the discriminative portion, according to a loss function which includes loss from both portions.

In an embodiment, the generative portion includes an appearance encoder shared with the discriminative portion, and a structure encoder. The appearance encoder encodes information about the one or more features, such as clothes, color, and texture, which relate to the appearance of the one or more features. The structure encoder encodes positional and geometric information related to the structure of the analyzed features, such as size, pose, background, viewpoint, etc.

As described herein, re-identification involves detecting correspondence between images, and in particular to determining whether a feature present in one image is present in another image. For example, an embodiment directed to person re-identification might determine whether the same individual is depicted in two or more images, by identifying correspondence between a person or persons depicted in the images. Person re-identification, and re-identification generally, may be adaptive to various complexities. Images captured by different cameras, or even by the same camera, may contain intra-class variations such as those caused by changes in background, viewpoint, the pose of the subject, and so forth.

In an embodiment, a learning framework jointly couples discriminative and generative learning. A generative module decomposes each pedestrian image into two latent spaces, an appearance space that mostly encodes appearance-related information, and a structure space that encodes attributes such as shape and position. The attributes encoded in the appearance and structure latent spaces may be referred to herein as codes.

In an embodiment, the appearance encoder is shared with the discriminative module, serving as a re-identification learning backbone. This design presents a unified framework that subsumes interactions between the generative and discriminative modules. The generative module produces synthesized images that are taken to refine the appearance encoder online, and the encoder influences the generative module with improved appearance encoding. Further, both modules are jointly optimized, given the shared appearance encoder.

In an embodiment, image generation is formulated as switching the appearance or structure codes between two images. Given pairwise images with the same or different identities, embodiments may generate realistic and diverse intra-composed or cross-id composed images by manipulating the codes. Unlike unconditional generative adversarial networks ("GANs"), this approach may allow for more controllable generation, or higher-quality generation. Unlike pose-guided generation, embodiments may not require additional auxiliary data, while still taking advantage of intra-dataset pose variations and other diversities beyond pose.

In embodiments, the generative module generates multiple images by retaining appearance codes and combining or varying structure codes. The generative module may, for example, generate images in which clothing or shoes worn by a person are retained in the generated image, but pose, viewpoint, or background is varied.

In embodiments, primary attribute learning is introduced via a dynamic soft labeling strategy. Other embodiments keep one structure code and combine with different appearance codes to produce images which maintain the pose, background, and identity-related fine detail but alter appearance-related cues such as clothes or shoes. This may permit more finely grained mining of attributes in order to enable learning of more subtle identity-related properties.

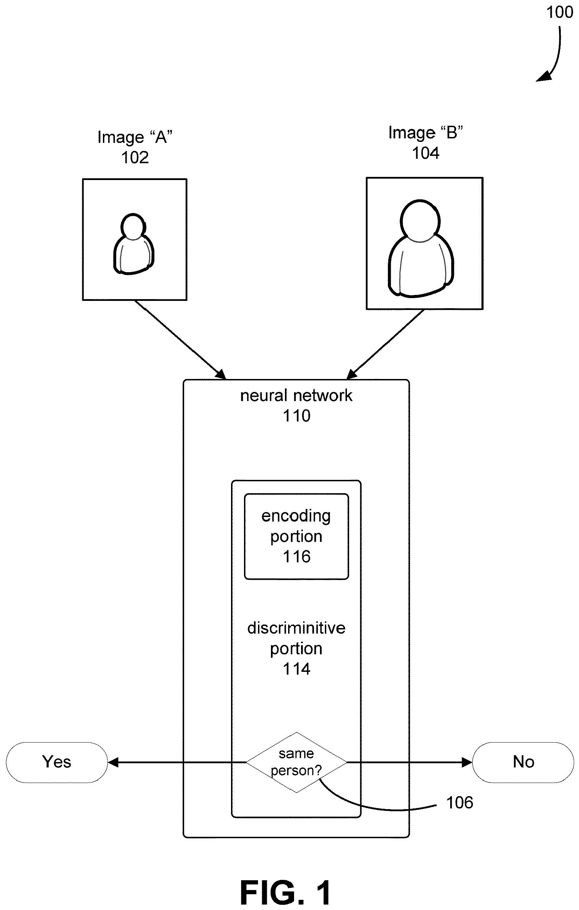

FIG. 1 illustrates an example re-identification system, in accordance with an embodiment. The example 100 of FIG. 1 may be implemented, in an embodiment, on one or more computers which include one or more processors to load into memory the parameters of a trained neural network 110, and to apply the neural network 110 to solve a problem 106.

In embodiments, the images "A" and "B" 102, 104 are obtained by respective different video sources, such as a pair of cameras. Alternatively, the images "A" and "B" are obtained by the same camera. The images may be obtained at different times. The images "A" and "B" 102, 104 can be recorded and/or provided to the neural network 110 as image data, in any of a wide variety of formats for image or video representation, such as "JPEG," "GIF," "MP4," "AVI," and so forth.

In an embodiment, images "A" 102 and "B" 104 are provided to the neural network 110. The neural network 110 can comprise various parameters and coefficients derived through a training process to enable a computing device to solve a problem 106. The problem 106 may be described, in general, as determining whether a feature present in image "A" 102 is also present in image "B" 104. In the example 100 of FIG. 1, the neural network 110 determines whether a person depicted in image "A" 102 is the same person depicted in image "B" 104. Although depicted as a "YES" or "NO" decision in FIG. 1, the problem 106 may also be expressed as determining a probability or likelihood that the depicted person is the same individual. Note that the images "A" and "B" 102, 104 may exhibit a variety of differences which may make this "re-identification" task challenging. The differences may include, but are not limited to, camera angle, lighting, resolution, colorization, and so forth. The differences may also include, but are not limited to, posture, position, pose, and so forth. The problem 106 may be referred to herein as re-identification, or detecting correspondence between image data. The re-identification task may be performed on a variety of features that are amendable to encodings of appearance and structure similar to those described herein.

In embodiments, the neural network 110 comprises an encoding portion 116 and a discriminative portion 114. The training of the neural network 110, which is described in more detail below, involves a generative portion whose encoding portion 116 is shared with the discriminative portion 114 during training. When deployed, the neural network 110 retains at least some of the encoding portion 116.

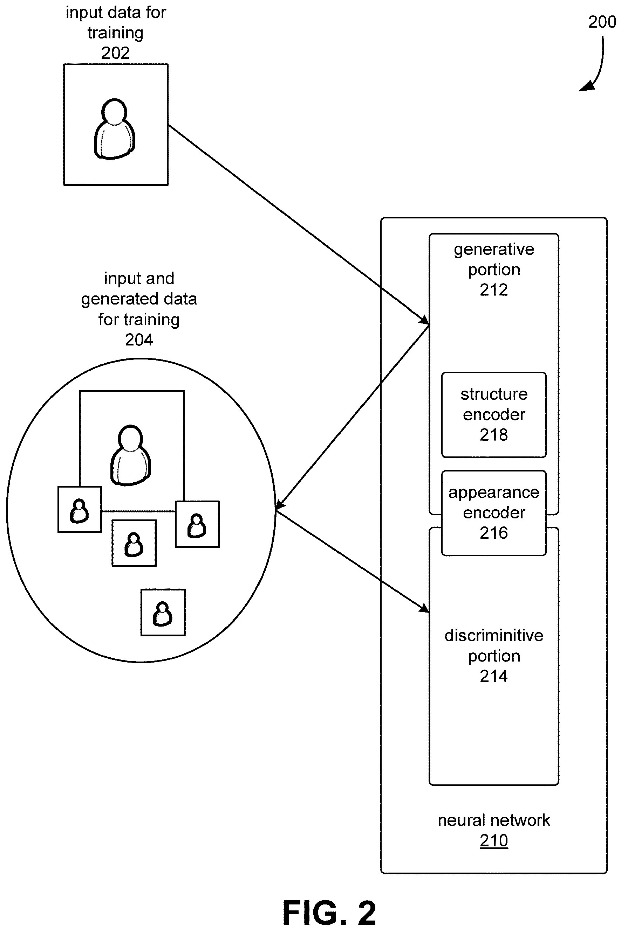

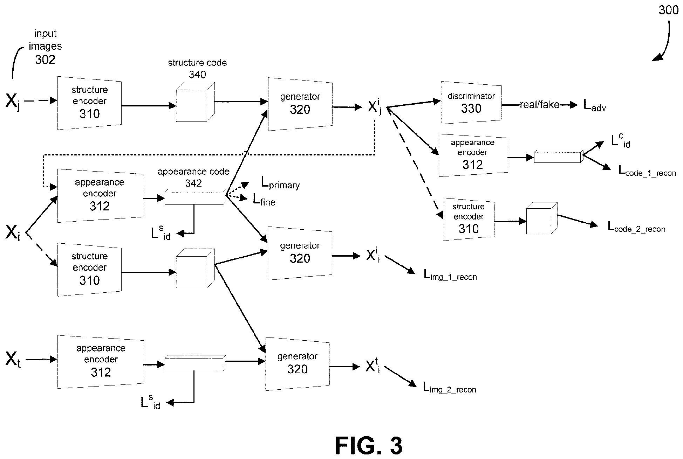

FIG. 2 illustrates an example of training a neural network for re-identification, in accordance with an embodiment. In the example 200 of FIG. 2, a neural network is trained to perform a re-identification task. For example, the neural network 110 of FIG. 1 may be trained, in an embodiment, in accordance with the process described here with respect to FIG. 2. Further details of the training are described in more detail with respect to FIGS. 3-6.

In an embodiment, input data 202 comprises one or more images. Input image data may be sized to a $258 \times 128$ grid, although this is not required, and various embodiments may employ other sizes in addition to or instead of $258 \times 128$.

In an embodiments of the training process, a neural network 210 comprises a generative portion 212 and a discriminative portion 214 that are jointly trained with an appearance encoder 216 that serves as a backbone for re-identification learning. The generative portion comprises the appearance encoder 216 and a structure encoder 218. The appearance encoder encodes appearance-related attributes of the input data 202. The appearance-related attributes may include, but are not necessarily limited to, clothing, footwear, styles, and textures. The structure encoder 216 encodes attributes of the input data 202 that relate to position and shape, which may include, but are not necessarily limited to, body size, pose, hair, carried objects, background, viewpoint, etc.

In an embodiment, the generative portion 212 of the network generates variations of the input data 202 by switching appearance or structure codes generated by the appearance and structure encoders 216, 218. The generative portion 212 may generate variations of the input images, for example by performing self-identity and cross-identity generation, to generate a wide variety of training samples in the generated data 204.

In an embodiment, the appearance encoder 216 is shared between the generative and the discriminative portions 212, 214 of the neural network 210 during training. During training, the discriminative portion 214 makes use of the generated data by manipulating the appearance and structure codes. Embodiments treat the generated images in two different perspectives through primary attribute learning and fine-grained attribute mining, where the former focuses on structure-invariant appearance cues (which may, for example, include clothing, footwear, or stylistic choices, as non-limiting examples), and the latter attends to appearance-invariant structural properties, such as position and geometry. Examples of positional and geometric properties may include, but are not necessarily limited to, body size, pose, hairstyle, objects carried, background, viewpoint, etc.

In an embodiment, a machine readable medium has stored thereon instructions which, in response to being performed by one or more processors, cause the processors to train one or more neural networks. The training may be performed in accordance with the procedures described herein with respect to FIGS. 3-6. The neural networks during training include a generative portion and a discriminative portion, which are trained by execution of the instructions to determine whether one or more features which appear in a first image also appear in a second image, using encoded information about the appearance and shape of the one or more features.

In an embodiment, the neural network trained by performing the instructions comprises an encoder which is shared between the generative and discriminative portions of the network during training. The encoder encodes the information about the appearance and shape of the one or more features. The encoder may, in an embodiment, be an appearance encoder. Alternatively, or in addition, the encoder may be a structure encoder. The generative portion uses the encoded information output by the encoder during training, such that the discriminative portion of the network is better able to identify fine-grained attributes indicative of identity.

In an embodiment, a system for training the neural network 210 comprises one or more computers, including one or more processors. The processors train the network, using the procedures described herein with respect to FIGS. 3-6, to determine whether one or more features appear in both a first image and a second image. The neural network 210 is trained to make the determination based, at least in part, on a generative portion 212 and a discriminative portion 214, and an encoding portion 218 used by both the generative portion and discriminative portion.

In an embodiment, the generative and discriminative portions are jointly trained, by using a joint loss function which includes weighted sums to account for generative and discriminative loss.

In an embodiment, two encoders are used by the generative portion 212. An appearance encode encodes attributes associated with appearance. These attributes may include, but are not necessarily limited to, clothing, color, and texture. The appearance code, in embodiments, is shared between the generative 212 and discriminative 214 portions of the network 210. The second encoder used by the generative portion 212 is a structure encoder, which encodes structural and other attributes, such as size, pose, background, viewpoint, etc.

In an embodiment, the generative portion 212 generates images, where the generated images include variations in the appearance of the feature being re-identified. For example, in the case of person re-identification, the generative portion may generate a plurality of images in which the same individual is depicted wearing different clothing. Similarly, the generative portion may generate a plurality of images in which the same clothing is worn by different individuals. In embodiments, this is accomplished by training the generative portion to perform self-identity generation and cross-identity generation.

FIG. 3 illustrates training a neural network for performing re-identification, in accordance with an embodiment. The neural network 300 depicted in FIG. 3 employs tight coupling between a generative module for image generation and a discriminative portion for re-identification learning. The neural network 300 uses two image mappings, self-identity generation and cross-identity generation, which are fed into the re-identification learning process. The discriminative portions use primary attribute learning and fine-grained attribute learning. These are co-learned with the generative portion to better leverage generated data.

In the example 300 of FIG. 3, real or input images are indicated as $X_i$, $X_j$, and $X_t$ 302. Given two real images Xi and Xj, the generative portions of the neural network 300 generates a new image by swapping the appearance or structure codes of the two images. The generative portion includes an appearance encoder $E_a: x_i \to a_i$ 312, a structure encoder $E_s: x_j \to s_j$ 310, a decoder $G: (a_i, s_j) \to x_j^i$, and a discriminator $D$ 330 to distinguish between generated images and real ones. In the case of $i = j$, the generator 320 can be viewed, in embodiments, as an auto-encoder, in which $X_i^i \approx x_i$, where $X_i^i$ is a generated image.

In an embodiment, a structure code $s_j$ 340 maintains more spatial resolution than an appearance code $a_i$ 342, to preserve structural or geometric properties. However, this may result in a trivial solution for $G$ to only use $s_j$ but ignore $a_i$ in image generation since decoders tend to rely on the attribute with more spatial information. In an embodiment, input images of $E_s$ are converted into gray-scale to drive $G$ to leverage both $a_i$ and $s_j$. In embodiments, two objectives are enforced for the generative module: (1) self-identity generation to regularize the generator and (2) cross-identity generation to make generated images controllable and match real data distribution.

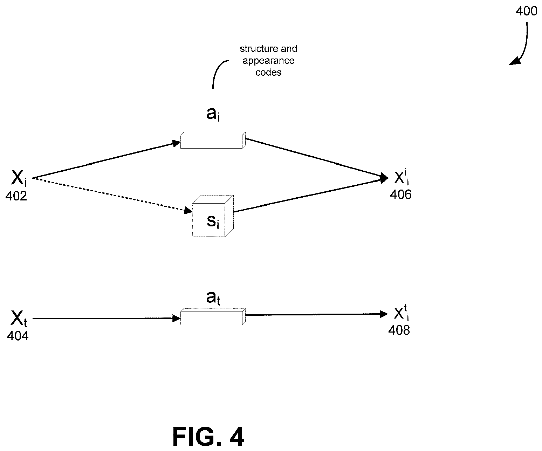

In an embodiment, as illustrated in FIG. 4, given an image $x_i$ 402, the generative module learns how to reconstruct $x_i$ from itself, to obtain $x_i^i$ 406. This simple self-reconstruction task serves a regularization role in the generation. Embodiments may reconstruct the image using a pixel-wise loss:

$$L_{recon}^{img1} = \mathrm{E}[\|x_i - G(a_i, s_i)\|_1]$$

In an embodiment, it may be assumed that the appearance codes of the same person in different images are close. Another reconstruction task may be performed between any two images of the same identity. The generator should be able to reconstruct $x_i$ 402 through an image $x_t$ 404 with the same identity $y_i = y_t$ to obtain $x_i^t$ 408:

$$L_{recon}^{img2} = \mathrm{E}[\|x_i - G(a_t, s_i)\|_1]$$

In an embodiment, this same-identity but cross-image reconstruction loss encourages the appearance encoder to pull appearance codes of the same identity together so that intra-class attribute variations are reduced. To force the appearance codes of different images to stay apart, embodiments may use identification loss to distinguish different identities:

$$L_{id}^s = \mathrm{E}[-\log(p(y_i|x_i))]$$

Here, $p(y_i|x_i)$ is the predicted probability that $x_i$ belongs to a ground truth class $y_i$ based on its appearance code.

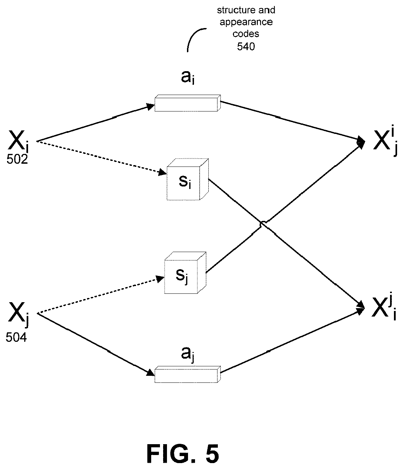

In an embodiment, self-identity generation works with image reconstruction using the same identity, and cross-identity generation focuses on image generation with different identities. In cross-identity generation, there is no pixel-level ground-truth supervision. Instead, embodiments use latent code reconstruction based on appearance and structure codes to control image generation. As shown in FIG. 5, given two images $x_i$ 502 and $x_j$ 504 of different identities $y_i \# y_j$, the generated image $x_j^i = G(a_i, s_j)$ is used to retain the information of appearance and structure codes 540, specifically appearance code $a_i$ from $x_i$ and structure code $s_j$ from $x_j$, respectively. These two latent codes may then be reconstructed after encoding the generated image:

$$L_{recon}^{code1} = \mathrm{E}\left[\left\|a_i - E_a\left(G(a_i, s_j)\right)\right\|_1\right]$$

$$L_{recon}^{code2} = \mathrm{E}\left[\left\|s_j - E_s\left(G(a_i, s_j)\right)\right\|_1\right]$$

In an embodiment, similar to self-identity generation, identification loss is enforced on the generated image based on its appearance code., to keep identity consistency:

$$L_{id}^c = \mathrm{E}\left[-\log(p(y_i|x_j^i))\right]$$

Here, $p(y_i|x_j^i)$ is the predicted probability of $x_j^i$ 506 belonging to the ground-truth class $y_i$ of $x_i$, the image that provides appearance code in generating $x_j^i$.

In an embodiment, adversarial loss is employed to match the distribution of generated images to the real data distribution:

$$L_{adv} = \mathrm{E}\left[\log D(x_i) + \log\left(1 - D\left(G(a_i, s_j)\right)\right)\right]$$

In an embodiment, the generation mechanism is used to enable the generative module to learn appearance and structure codes with explicit and complementary meanings and generate high-quality pedestrian images based on the latent codes. This largely eases the generation complexity. This may help to avoid having to learn image generation either from random noise or managing the pose factor only, which may make it hard to manipulate the outputs and may introduce artifacts. Moreover, due to using the latent codes, the variants in images generated by embodiments disclosed herein may be explainable and constrained in the existing contents of real images, which also promotes generation realism. In cases and embodiments, given O(N) training images, $O(N \times N)$ different images are generated by sampling various image pairs, resulting in a much large online generated training sample pool.

In an embodiment, a discriminative module is embedded in the generative module by sharing the appearance encoder as a backbone for re-identification learning. In accordance with the images generated by switching either appearance or structure codes, primary attribute learning and fine-grained attribute mining are employed to better take advantage of the online generated images. Since the two tasks focus on different aspects of generated images, embodiments may branch out two headers on top of the appearance encoder for the two types of attribute learning.

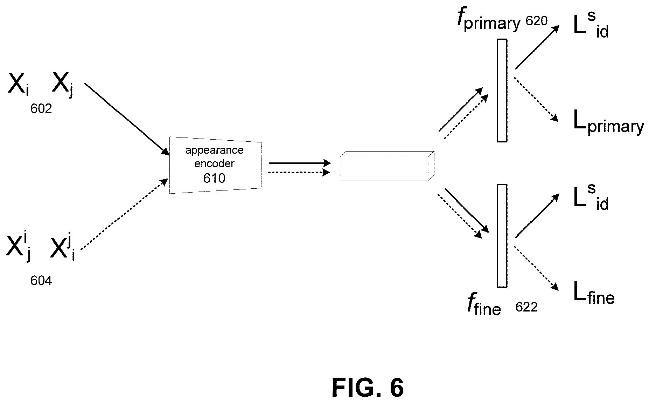

FIG. 6 illustrates the two complementary attributes, $f_{primary}$ 620 and $f_{fine}$ 622, learned in the discriminative portion of the network, in accordance with an embodiment.

In an embodiment, teacher-student type supervision with dynamic soft labeling is employed. Embodiments may use a teacher model to dynamically assign a soft label to $x_j^i$ or $x_i^j$ 604, depending on their compound appearance and structure from $x_i$ and $x_j$ 602. The teacher model is a baseline convolutional neural network trained with identification loss on the original training set. To train the discriminative module for primary attribute learning, embodiments may minimize the Kullback-Leibler divergence between the probability distribution $p(x_j^i)$ predicted by the discriminative module and the probability distribution $q(x_j^i)$ predicted by the teacher, as in the following, where $K$ is the number of identities:

$$L_{prim} = \mathrm{E}\left[-\sum_{k=1}^{K} q(k|x_j^i)\log(\frac{p(k|x_j^i)}{q(k|x_j^i)})\right]$$

In an embodiment, simulated changes of attributes of clothing, for the same individual, are enabled by the disclosed generative portion of the network. When training on images organized in this way, the discriminative module is forced to learn fine-grained identity attributes, such as hair, body size, and so on, that are independent to clothing. Embodiments may view the images generated by one structure code combining with different appearance codes by the appearance encoder 610 as the same class as the real image providing the structure code. To train the discriminative module for fine-grained attribute mining, embodiments enforce identification loss on this particular categorizing:

$$L_{fine} = \mathrm{E}\left[-\log\left(p\left(y_j \middle| x_j^i\right)\right)\right]$$

In an embodiment, this loss function imposes additional identity supervision to the discriminative module in a multitasking manner. Moreover, rather than using manually labeled pedestrian attributes, this approach performs fine-grained attribute mining by leveraging the synthetic images. There may also be no need to explicitly search for the hard training samples that usually share fine-grained details, since the discriminative module learns to pay attention to subtle identity properties through this fine-grained attribute mining.

In an embodiment, the appearance and structure encoders, decoder, and discriminator are jointly trained to optimize the total objective. The objective may be expressed as a weighted sum of the following losses:

$$L_{total}(E_a, E_s, G, D) = \lambda_{img} L_{recon}^{img} + L_{recon}^{code} + L_{id}^{s} + \lambda_{id} L_{id}^{c} + L_{adv} + \lambda_{prim} L_{prim} + \lambda_{fine} L_{fine}$$

Here,    $L_{recon}^{img} = L_{recon}^{img1} + L_{recon}^{img2}$    is    the    image    reconstruction    loss    in    self-identity    generation,    and

$L_{recon}^{code} = L_{recon}^{code1} + L_{recon}^{code2}$  is the latent code reconstruction loss in cross-identity generation. The weights $\lambda_{img}$, $\lambda_{id}$, $\lambda_{prim}$, and $\lambda_{fine}$ are weights to control the importance of the various loss-related terms.

In an embodiment, a large weight $\lambda_{img}$ is used for the image reconstruction loss. Since the quality of cross-id generated images is not great at the beginning, the identification loss $L_{id}^{c}$ may make the training unstable, so a small weight may be set for $\lambda_{id}$. Embodiments may fix the two weights during the training process. In embodiments, the discriminative attribute learning losses $L_{prim}$ and $L_{fine}$ are not involved until the generation quality is stable. In an embodiment, in the cross-identity generation as shown in FIG. 3, $E_a$, $E_s$, and G as well as $E_a$, $E_s$, and D are trained alternatively.

In an embodiment, one training phase is used for joint image generation and re-identification learning. This is in contrast with other techniques, which require two training phases to sequentially train a generative model and a re-identification model.

In an embodiment, a method for training a neural network to detect correspondence between images comprises configuring a first portion of a neural network to generate image data, and a second portion of the neural network to detect the correspondence between the images. The second portion detects the correspondence based, at least in part, on the generated image data. The first portion may comprise a generative portion, and the second portion may comprise a discriminative portion. The two portions are jointly trained, using a weighted loss function that includes components for both the generative and discriminative portions. The joint training may occur in the same pass, so that both the generative and discriminative portions are trained, at the same time, to optimize for the re-identification task.

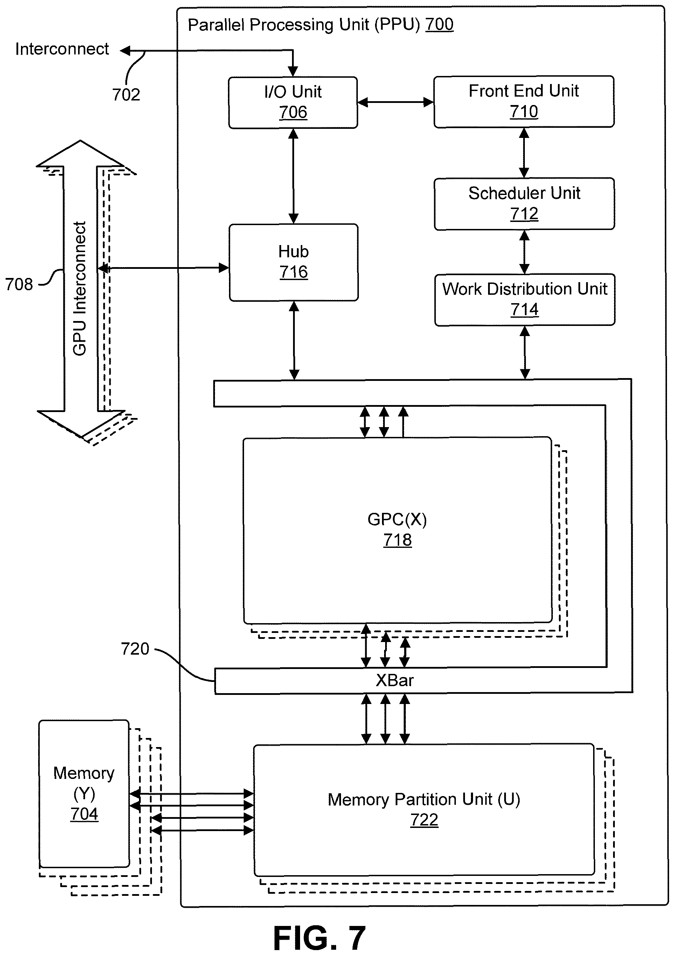

FIG. 7 illustrates a parallel processing unit ("PPU") 700, in accordance with one embodiment. In an embodiment, the PPU 700 is configured with machine-readable code that, if executed by the PPU, causes the PPU to perform some or all of processes and techniques described throughout this disclosure. For example, the PPU 700 may be configured with machine-readable code that, if executed by the PPU, causes the PPU to train a neural network in accordance with the disclosed embodiments, or to solve a re-identification problem using a neural network trained in accordance with the disclosed embodiments.

In an embodiment, the PPU 700 is a multi-threaded processor that is implemented on one or more integrated circuit devices and that utilizes multithreading as a latency-hiding technique designed to process computer-readable instructions (also referred to as machine-readable instructions or simply instructions) on multiple threads in parallel. In an embodiment, a thread refers to a thread of execution and is an instantiation of a set of instructions configured to be executed by the PPU 700. In an embodiment, the PPU 700 is a graphics processing unit ("GPU') configured to implement a graphics rendering pipeline for processing three-dimensional ("3D") graphics data in order to generate two-dimensional ("2D") image data for display on a display device such as a liquid crystal display (LCD) device. In an embodiment, the PPU 700 is utilized to perform computations such as linear algebra operations and machine-learning operations. FIG. 7 illustrates an example parallel processor for illustrative purposes only and should be construed as a non-limiting example of processor architectures contemplated within the scope of this disclosure and that any suitable processor may be employed to supplement and/or substitute for the same.

In an embodiment, one or more PPUs are configured to accelerate High Performance Computing ("HPC"), data center, and machine learning applications. In an embodiment, the PPU 700 is configured to accelerate deep learning systems and applications including the following non-limiting examples: autonomous vehicle platforms, deep learning, high-accuracy speech, image, text recognition systems, intelligent video analytics, molecular simulations, drug discovery, disease diagnosis, weather forecasting, big data analytics, astronomy, molecular dynamics simulation, financial modeling, robotics, factory automation, real-time language translation, online search optimizations, and personalized user recommendations, and more.

In an embodiment, the PPU 700 includes an Input/Output ("I/O") unit 706, a front-end unit 710, a scheduler unit 712, a work distribution unit 714, a hub 716, a crossbar ("Xbar") 720, one or more general processing clusters ("GPCs") 718, and one or more partition units 722. In an embodiment, the PPU 700 is connected to a host processor or other PPUs 700 via one or more high-speed GPU interconnects 708. In an embodiment, the PPU 700 is connected to a host processor or other peripheral devices via an interconnect or system bus 702. In an embodiment, the PPU 700 is connected to a local memory comprising one or more memory devices 704. In an embodiment, the local memory comprises one or more dynamic random access memory ("DRAM") devices. In an embodiment, the one or more DRAM devices are configured and/or configurable as high-bandwidth memory ("HBM") subsystems, with multiple DRAM dies stacked within each device.

The high-speed GPU interconnect 708 may refer to a wire-based multi-lane communications link that is used by systems to scale and include one or more PPUs 700 combined with one or more CPUs, supports cache coherence between the PPUs 700 and CPUs, and CPU mastering. In an embodiment, data and/or commands are transmitted by the high-speed GPU interconnect 708 through the hub 716 to/from other units of the PPU 700 such as one or more copy engines, video encoders, video decoders, power management units, and other components which may not be explicitly illustrated in FIG. 7.

In an embodiment, the I/O unit 706 is configured to transmit and receive communications (e.g., commands, data) from a host processor (not illustrated in FIG. 7) over the system bus 702. In an embodiment, the I/O unit 706 communicates with the host processor directly via the system bus 702 or through one or more intermediate devices such as a memory bridge. In an embodiment, the I/O unit 706 may communicate with one or more other processors, such as one or more of the PPUs 700 via the system bus 702. In an embodiment, the I/O unit 705 implements a Peripheral Component Interconnect Express ("PCIe") interface for communications over a PCIe bus. In an embodiment, the I/O unit 706 implements interfaces for communicating with external devices.

In an embodiment, the I/O unit 706 decodes packets received via the system bus 702. In an embodiment, at least some packets represent commands configured to cause the PPU 700 to perform various operations. In an embodiment, the I/O unit 706 transmits the decoded commands to various other units of the PPU 700 as specified by the commands. In an embodiment, commands are transmitted to the front-end unit 710 and/or transmitted to the hub 716 or other units of the PPU 700 such as one or more copy engines, a video encoder, a video decoder, a power management unit, etc. (not explicitly illustrated in FIG. 7). In an embodiment, the I/O unit 706 is configured to route communications between and among the various logical units of the PPU 700.

In an embodiment, a program executed by the host processor encodes a command stream in a buffer that provides workloads to the PPU 700 for processing. In an embodiment, a workload comprises instructions and data to be processed by those instructions. In an embodiment, the buffer is a region in a memory that is accessible (e.g., read/write) by both the host processor and the PPU 700 - the host interface unit may be configured to access the buffer in a system memory connected to the system bus 702 via memory requests transmitted over the system bus 702 by the I/O unit 706. In an embodiment, the host processor writes the command stream to the buffer and then transmits a pointer to the start of the command stream to the PPU 700 such that the front-end unit 710 receives pointers to one or more command streams and manages the one or more streams, reading commands from the streams and forwarding commands to the various units of the PPU 700.

In an embodiment, the front-end unit 710 is coupled to a scheduler unit 712 that configures the various GPCs 718 to process tasks defined by the one or more streams. In an embodiment, the scheduler unit 712 is configured to track state information related to the various tasks managed by the scheduler unit 712 where the state information may indicate which GPC 718 a task is assigned to, whether the task is active or inactive, a priority level associated with the task, and so forth. In an embodiment, the scheduler unit 712 manages the execution of a plurality of tasks on the one or more GPCs 718.

In an embodiment, the scheduler unit 712 is coupled to a work distribution unit 714 that is configured to dispatch tasks for execution on the GPCs 718. In an embodiment, the work distribution unit 714 tracks a number of scheduled tasks received from the scheduler unit 712 and the work distribution unit 714 manages a pending task pool and an active task pool for each of the GPCs 718. In an embodiment, the pending task pool comprises a number of slots (e.g., 32 slots) that contain tasks assigned to be processed by a particular GPC 718; the active task pool may comprise a number of slots (e.g., 4 slots) for tasks that are actively being processed by the GPCs 718 such that as a GPC 718 completes the execution of a task, that task is evicted from the active task pool for the GPC 718 and one of the other tasks from the pending task pool is selected and scheduled for execution on the GPC 718. In an embodiment, if an active task is idle on the GPC 718, such as while waiting for a data dependency to be resolved, then the active task is evicted from the GPC 718 and returned to the pending task pool while another task in the pending task pool is selected and scheduled for execution on the GPC 718.

In an embodiment, the work distribution unit 714 communicates with the one or more GPCs 718 via XBar 720. In an embodiment, the XBar 720 is an interconnect network that couples many of the units of the PPU 700 to other units of the PPU 700 and can be configured to couple the work distribution unit 714 to a particular GPC 718. Although not shown explicitly, one or more other units of the PPU 700 may also be connected to the XBar 720 via the hub 716.

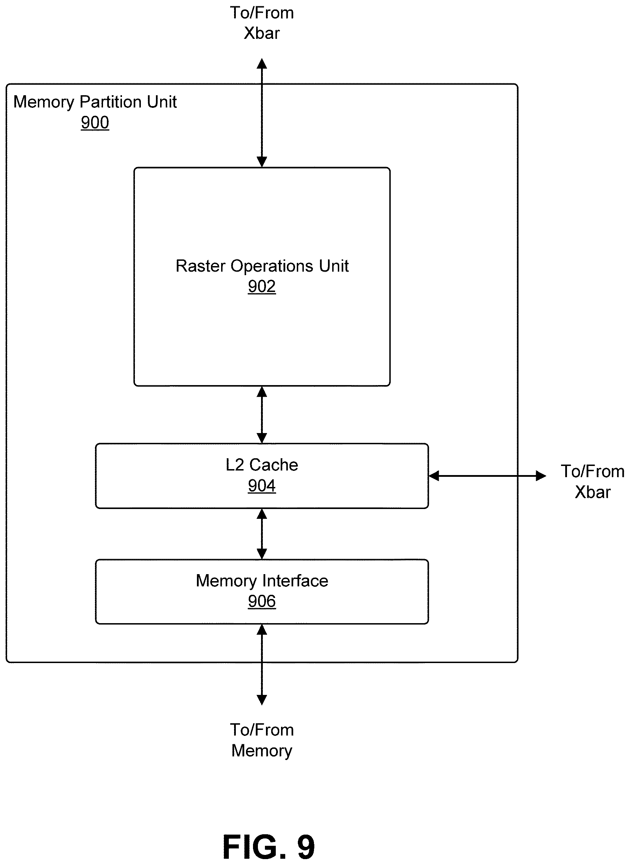

The tasks are managed by the scheduler unit 712 and dispatched to a GPC 718 by the work distribution unit 714. The GPC 718 is configured to process the task and generate results. The results may be consumed by other tasks within the GPC 718, routed to a different GPC 718 via the XBar 720, or stored in the memory 704. The results can be written to the memory 704 via the partition units 722, which implement a memory interface for reading and writing data to/from the memory 704. The results can be transmitted to another PPU 700 or CPU via the high-speed GPU interconnect 708. In an embodiment, the PPU 700 includes a number U of partition units 722 that is equal to the number of separate and distinct memory devices 704 coupled to the PPU 700. A partition unit 722 will be described in more detail below in conjunction with FIG. 9.

In an embodiment, a host processor executes a driver kernel that implements an application programming interface ("API") that enables one or more applications executing on the host processor to schedule operations for execution on the PPU 700. In an embodiment, multiple compute applications are simultaneously executed by the PPU 700 and the PPU 700 provides isolation, quality of service ("QoS"), and independent address spaces for the multiple compute applications. In an embodiment, an application generates instructions (e.g., in the form of API calls) that cause the driver kernel to generate one or more tasks for execution by the PPU 700 and the driver kernel outputs tasks to one or more streams being processed by the PPU 700. In an embodiment, each task comprises one or more groups of related threads, which may be referred to as a warp. In an embodiment, a warp comprises a plurality of related threads (e.g., 32 threads) that can be executed in parallel. In an embodiment, cooperating threads can refer to a plurality of threads including instructions to perform the task and that exchange data through shared memory.

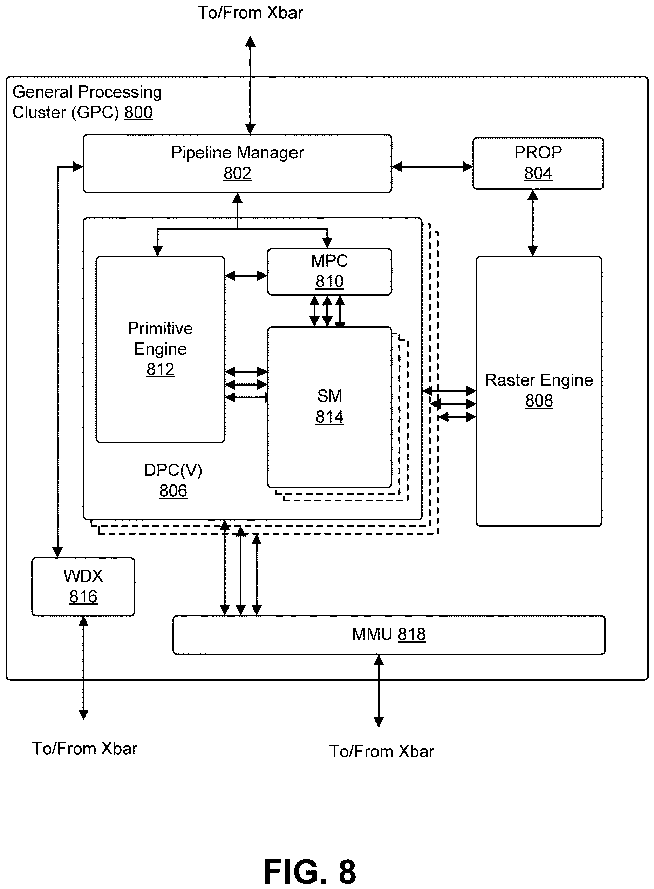

FIG. 8 illustrates a GPC 800 such as the GPC illustrated of the PPU 700 of FIG. 7, in accordance with one embodiment. In an embodiment, each GPC 800 includes a number of hardware units for processing tasks and each GPC 800 includes a pipeline manager 802, a pre-raster operations unit ("PROP") 804, a raster engine 808, a work distribution crossbar ("WDX") 816, a memory management unit ("MMU") 818, one or more Data Processing Clusters ("DPCs") 806, and any suitable combination of parts. It will be appreciated that the GPC 800 of FIG. 8 may include other hardware units in lieu of or in addition to the units shown in FIG. 8.

In an embodiment, the operation of the GPC 800 is controlled by the pipeline manager 802. The pipeline manager 802 manages the configuration of the one or more DPCs 806 for processing tasks allocated to the GPC 800. In an embodiment, the pipeline manager 802 configures at least one of the one or more DPCs 806 to implement at least a portion of a graphics rendering pipeline. In an embodiment, a DPC 806 is configured to execute a vertex shader program on the programmable streaming multiprocessor ("SM") 814. The pipeline manager 802 is configured to route packets received from a work distribution to the appropriate logical units within the GPC 800, in an embodiment, and some packets may be routed to fixed function hardware units in the PROP 804 and/or raster engine 808 while other packets may be routed to the DPCs 806 for processing by the primitive engine 812 or the SM 814. In an embodiment, the pipeline manager 802 configures at least one of the one or more DPCs 806 to implement a neural network model and/or a computing pipeline.

The PROP unit 804 is configured, in an embodiment, to route data generated by the raster engine 808 and the DPCs 806 to a Raster Operations ("ROP") unit in the memory partition unit, described in more detail above. In an embodiment, the PROP unit 804 is configured to perform optimizations for color blending, organize pixel data, perform address translations, and more. The raster engine 808 includes a number of fixed function hardware units configured to perform various raster operations, in an embodiment, and the raster engine 808 includes a setup engine, a coarse raster engine, a culling engine, a clipping engine, a fine raster engine, a tile coalescing engine, and any suitable combination thereof. The setup engine, in an embodiment, receives transformed vertices and generates plane equations associated with the geometric primitive defined by the vertices; the plane equations are transmitted to the coarse raster engine to generate coverage information (e.g., an x, y coverage mask for a tile) for the primitive; the output of the coarse raster engine is transmitted to the culling engine where fragments associated with the primitive that fail a z-test are culled, and transmitted to a clipping engine where fragments lying outside a viewing frustum are clipped. In an embodiment, the fragments that survive clipping and culling are passed to the fine raster engine to generate attributes for the pixel fragments based on the plane equations generated by the setup engine. In an embodiment, the output of the raster engine 808 comprises fragments to be processed by any suitable entity such as by a fragment shader implemented within a DPC 806.

In an embodiment, each DPC 806 included in the GPC 800 comprises an M-Pipe Controller ("MPC") 810; a primitive engine 812; one or more SMs 814; and any suitable combination thereof. In an embodiment, the MPC 810 controls the operation of the DPC 806, routing packets received from the pipeline manager 802 to the appropriate units in the DPC 806. In an embodiment, packets associated with a vertex are routed to the primitive engine 812, which is configured to fetch vertex attributes associated with the vertex from memory; in contrast, packets associated with a shader program may be transmitted to the SM 814.

In an embodiment, the SM 814 comprises a programmable streaming processor that is configured to process tasks represented by a number of threads. In an embodiment, the SM 814 is multi-threaded and configured to execute a plurality of threads (e.g., 32 threads) from a particular group of threads concurrently and implements a SIMD (Single-Instruction, Multiple-Data) architecture where each thread in a group of threads (e.g., a warp) is configured to process a different set of data based on the same set of instructions. In an embodiment, all threads in the group of threads execute the same instructions. In an embodiment, the SM 814 implements a SIMT (Single-Instruction, Multiple Thread) architecture wherein each thread in a group of threads is configured to process a different set of data based on the same set of instructions, but where individual threads in the group of threads are allowed to diverge during execution. In an embodiment, a program counter, call stack, and execution state is maintained for each warp, enabling concurrency between warps and serial execution within warps when threads within the warp diverge. In another embodiment, a program counter, call stack, and execution state is maintained for each individual thread, enabling equal concurrency between all threads, within and between warps. In an embodiment, execution state is maintained for each individual thread and threads executing the same instructions may be converged and executed in parallel for better efficiency. In an embodiment, the SM 814 is described in more detail below.

In an embodiment, the MMU 818 provides an interface between the GPC 800 and the memory partition unit and the MMU 818 provides translation of virtual addresses into physical addresses, memory protection, and arbitration of memory requests. In an embodiment, the MMU 818 provides one or more translation lookaside buffers ("TLBs") for performing translation of virtual addresses into physical addresses in memory.

FIG. 9 illustrates a memory partition unit of a PPU, in accordance with one embodiment. In an embodiment, the memory partition unit 900 includes a Raster Operations ("ROP") unit 902; a level two ("L2") cache 904; a memory interface 906; and any suitable combination thereof. The memory interface 906 is coupled to the memory. Memory interface 906 may implement 32, 64, 128, 1024-bit data buses, or the like, for high-speed data transfer. In an embodiment, the PPU incorporates U memory interfaces 906, one memory interface 906 per pair of partition units 900, where each pair of partition units 900 is connected to a corresponding memory device. For example, PPU may be connected to up to Y memory devices, such as high bandwidth memory stacks or graphics double-data-rate, version 5, synchronous dynamic random access memory ("GDDR5 SDRAM").

In an embodiment, the memory interface 906 implements an HBM2 memory interface and Y equals half U. In an embodiment, the HBM2 memory stacks are located on the same physical package as the PPU, providing substantial power and area savings compared with conventional GDDR5 SDRAM systems. In an embodiment, each HBM2 stack includes four memory dies and Y equals 4, with HBM2 stack including two 128-bit channels per die for a total of 8 channels and a data bus width of 1024 bits.

In an embodiment, the memory supports Single-Error Correcting Double-Error Detecting ("SECDED") Error Correction Code ("ECC") to protect data. ECC provides higher reliability for compute applications that are sensitive to data corruption. Reliability is especially important in large-scale cluster computing environments where PPUs process very large datasets and/or run applications for extended periods.

In an embodiment, the PPU implements a multi-level memory hierarchy. In an embodiment, the memory partition unit 900 supports a unified memory to provide a single unified virtual address space for CPU and PPU memory, enabling data sharing between virtual memory systems. In an embodiment the frequency of accesses by a PPU to memory located on other processors is trace to ensure that memory pages are moved to the physical memory of the PPU that is accessing the pages more frequently. In an embodiment, the high-speed GPU interconnect 708 supports address translation services allowing the PPU to directly access a CPU's page tables and providing full access to CPU memory by the PPU.

In an embodiment, copy engines transfer data between multiple PPUs or between PPUs and CPUs. In an embodiment, the copy engines can generate page faults for addresses that are not mapped into the page tables and the memory partition unit 900 then services the page faults, mapping the addresses into the page table, after which the copy engine performs the transfer. In an embodiment, memory is pinned (i.e., non-pageable) for multiple copy engine operations between multiple processors, substantially reducing the available memory. In an embodiment, with hardware page faulting, addresses can be passed to the copy engines without regard as to whether the memory pages are resident, and the copy process is transparent.

Data from the memory of FIG. 7 or other system memory is fetched by the memory partition unit 900 and stored in the L2 cache 904, which is located on-chip and is shared between the various GPCs, in accordance with one embodiment. Each memory partition unit 900, in an embodiment, includes at least a portion of the L2 cache 860 associated with a corresponding memory device. In an embodiment, lower level caches are implemented in various units within the GPCs. In an embodiment, each of the SMs 940 may implement a level one ("L1") cache wherein the L1 cache is private memory that is dedicated to a particular SM 940 and data from the L2 cache 904 is fetched and stored in each of the L1 caches for processing in the functional units of the SMs 940. In an embodiment, the L2 cache 904 is coupled to the memory interface 906 and the XBar 720.

The ROP unit 902 performs graphics raster operations related to pixel color, such as color compression, pixel blending, and more, in an embodiment. The ROP unit 902, in an embodiment, implements depth testing in conjunction with the raster engine 925, receiving a depth for a sample location associated with a pixel fragment from the culling engine of the raster engine 925. In an embodiment, the depth is tested against a corresponding depth in a depth buffer for a sample location associated with the fragment. In an embodiment, if the fragment passes the depth test for the sample location, then the ROP unit 902 updates the depth buffer and transmits a result of the depth test to the raster engine 925. It will be appreciated that the number of partition units 900 may be different than the number of GPCs and, therefore, each ROP unit 902 can, in an embodiment, be coupled to each of the GPCs. In an embodiment, the ROP unit 902 tracks packets received from the different GPCs and determines which that a result generated by the ROP unit 902 is routed to through the Xbar.

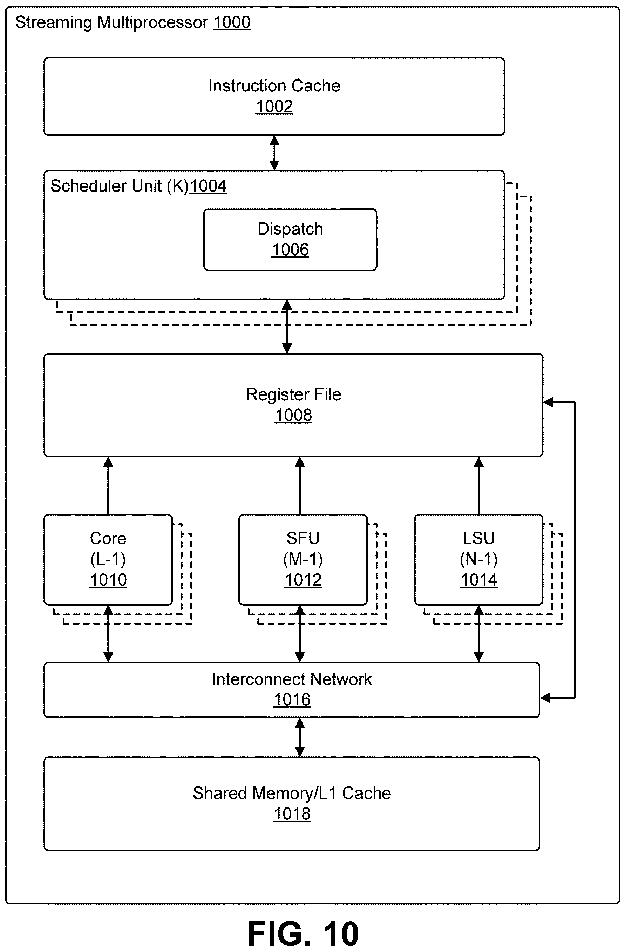

FIG. 10 illustrates a streaming multi-processor such as the streaming multi-processor of FIG. 8, in accordance with one embodiment. In an embodiment, the SM 1000 includes: an instruction cache 1002; one or more scheduler units 1004; a register file 1008; one or more processing cores 1010; one or more special function units ("SFUs") 1012; one or more load/store units ("LSUs") 1014; an interconnect network 1016; a shared memory/L1 cache 1018; and any suitable combination thereof. In an embodiment, the work distribution unit dispatches tasks for execution on the GPCs of the PPU and each task is allocated to a particular DPC within a GPC and, if the task is associated with a shader program, the task is allocated to an SM 1000. In an embodiment, the scheduler unit 1004 receives the tasks from the work distribution unit and manages instruction scheduling for one or more thread blocks assigned to the SM 1000. In an embodiment, the scheduler unit 1004 schedules thread blocks for execution as warps of parallel threads, wherein each thread block is allocated at least one warp. In an embodiment, each warp executes threads. In an embodiment, the scheduler unit 1004 manages a plurality of different thread blocks, allocating the warps to the different thread blocks and then dispatching instructions from the plurality of different cooperative groups to the various functional units (e.g., cores 1010, SFUs 1012, and LSUs 1014) during each clock cycle.

Cooperative Groups may refer to a programming model for organizing groups of communicating threads that allows developers to express the granularity at which threads are communicating, enabling the expression of richer, more efficient parallel decompositions. In an embodiment, cooperative launch APIs support synchronization amongst thread blocks for the execution of parallel algorithms. In an embodiment, applications of conventional programming models provide a single, simple construct for synchronizing cooperating threads: a barrier across all threads of a thread block (e.g., the syncthreads() function). However, programmers would often like to define groups of threads at smaller than thread block granularities and synchronize within the defined groups to enable greater performance, design flexibility, and software reuse in the form of collective group-wide function interfaces. Cooperative Groups enables programmers to define groups of threads explicitly at sub-block (i.e., as small as a single thread) and multi-block granularities, and to perform collective operations such as synchronization on the threads in a cooperative group. The programming model supports clean composition across software boundaries, so that libraries and utility functions can synchronize safely within their local context without having to make assumptions about convergence. Cooperative Groups primitives enable new patterns of cooperative parallelism, including producer-consumer parallelism, opportunistic parallelism, and global synchronization across an entire grid of thread blocks.

In an embodiment, a dispatch unit 1006 is configured to transmit instructions to one or more of the functional units and the scheduler unit 1004 includes two dispatch units 1006 that enable two different instructions from the same warp to be dispatched during each clock cycle. In an embodiment, each scheduler unit 1004 includes a single dispatch unit 1006 or additional dispatch units 1006.

Each SM 1000, in an embodiment, includes a register file 1008 that provides a set of registers for the functional units of the SM 1000. In an embodiment, the register file 1008 is divided between each of the functional units such that each functional unit is allocated a dedicated portion of the register file 1008. In an embodiment, the register file 1008 is divided between the different warps being executed by the SM 1000 and the register file 1008 provides temporary storage for operands connected to the data paths of the functional units. In an embodiment, each SM 1000 comprises a plurality of L processing cores 1010. In an embodiment, the SM 1000 includes a large number (e.g., 128 or more) of distinct processing cores 1010. Each core 1010, in an embodiment, includes a fully-pipelined, single-precision, double-precision, and/or mixed precision processing unit that includes a floating point arithmetic logic unit and an integer arithmetic logic unit. In an embodiment, the floating point arithmetic logic units implement the IEEE 754-2008 standard for floating point arithmetic. In an embodiment, the cores 1010 include 64 single-precision (32-bit) floating point cores, 64 integer cores, 32 double-precision (64-bit) floating point cores, and 8 tensor cores.

Tensor cores are configured to perform matrix operations in accordance with an embodiment. In an embodiment, one or more tensor cores are included in the cores 1010. In an embodiment, the tensor cores are configured to perform deep learning matrix arithmetic, such as convolution operations for neural network training and inferencing. In an embodiment, each tensor core operates on a 4x4 matrix and performs a matrix multiply and accumulate operation $D = A \times B + C$, where A, B, C, and D are 4x4 matrices.

In an embodiment, the matrix multiply inputs A and B are 16-bit floating point matrices and the accumulation matrices C and D are 16-bit floating point or 32-bit floating point matrices. In an embodiment, the tensor cores operate on 16-bit floating point input data with 32-bit floating point accumulation. In an embodiment, the 16-bit floating point multiply requires 64 operations and results in a full precision product that is then accumulated using 32-bit floating point addition with the other intermediate products for a 4x4x4 matrix multiply. Tensor cores are used to perform much larger two-dimensional or higher dimensional matrix operations, built up from these smaller elements, in an embodiment. In an embodiment, an API, such as CUDA 9 C++ API, exposes specialized matrix load, matrix multiply and accumulate, and matrix store operations to efficiently use tensor cores from a CUDA-C++ program. In an embodiment, at the CUDA level, the warp-level interface assumes 16x16 size matrices spanning all 32 threads of the warp.

In an embodiment, each SM 1000 comprises *M* SFUs 1012 that perform special functions (e.g., attribute evaluation, reciprocal square root, and the like). In an embodiment, the SFUs 1012 include a tree traversal unit configured to traverse a hierarchical tree data structure. In an embodiment, the SFUs 1012 include texture unit configured to perform texture map filtering operations. In an embodiment, the texture units are configured to load texture maps (e.g., a 2D array of texels) from the memory and sample the texture maps to produce sampled texture values for use in shader programs executed by the SM 1000. In an embodiment, the texture maps are stored in the shared memory/L1 cache. The texture units implement texture operations such as filtering operations using mip-maps (e.g., texture maps of varying levels of detail), in accordance with one embodiment. In an embodiment, each SM 1000 includes two texture units.

Each SM 1000 comprises N LSUs 854 that implement load and store operations between the shared memory/L1 cache 1018 and the register file 1008, in an embodiment. Each SM 1000 includes an interconnect network 1016 that connects each of the functional units to the register file 1008 and the LSU 1014 to the register file 1008, shared memory/L1 cache 1018 in an embodiment. In an embodiment, the interconnect network 1016 is a crossbar that can be configured to connect any of the functional units to any of the registers in the register file 1008 and connect the LSUs 1014 to the register file and memory locations in shared memory/L1 cache 1018.

The shared memory/L1 cache 1018 is an array of on-chip memory that allows for data storage and communication between the SM 1000 and the primitive engine and between threads in the SM 1000 in an embodiment. In an embodiment, the shared memory/L1 cache 1018 comprises 128KB of storage capacity and is in the path from the SM 1000 to the partition unit. The shared memory/L1 cache 1018, in an embodiment, is used to cache reads and writes. One or more of the shared memory/L1 cache 1018, L2 cache, and memory are backing stores.

Combining data cache and shared memory functionality into a single memory block provides improved performance for both types of memory accesses, in an embodiment. The capacity, in an embodiment, is used or is usable as a cache by programs that do not use shared memory, such as if shared memory is configured to use half of the capacity, texture and load/store operations can use the remaining capacity. Integration within the shared memory/L1 cache 1018 enables the shared memory/L1 cache 1018 to function as a high-throughput conduit for streaming data while simultaneously providing high-bandwidth and low-latency access to frequently reused data, in accordance with an embodiment. When configured for general purpose parallel computation, a simpler configuration can be used compared with graphics processing. In an embodiment, fixed function graphics processing units are bypassed, creating a much simpler programming model. In the general purpose parallel computation configuration, the work distribution unit assigns and distributes blocks of threads directly to the DPCs, in an embodiment. The threads in a block execute the same program, using a unique thread ID in the calculation to ensure each thread generates unique results, using the SM 1000 to execute the program and perform calculations, shared memory/L1 cache 1018 to communicate between threads, and the LSU 1014 to read and write global memory through the shared memory/L1 cache 1018 and the memory partition unit, in accordance with one embodiment. In an embodiment, when configured for general purpose parallel computation, the SM 1000 writes commands that the scheduler unit can use to launch new work on the DPCs.

In an embodiment, the PPU is included in or coupled to a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, and more. In an embodiment, the PPU is embodied on a single semiconductor substrate. In an embodiment, the PPU is included in a system-on-a-chip ("SoC") along with one or more other devices such as additional PPUs, the memory, a reduced instruction set computer ("RISC") CPU, a memory management unit ("MMU"), a digital-to-analog converter ("DAC"), and the like.

In an embodiment, the PPU may be included on a graphics card that includes one or more memory devices. The graphics card may be configured to interface with a PCIe slot on a motherboard of a desktop computer. In yet another embodiment, the PPU may be an integrate graphics processing unit ("iGPU') included in the chipset of the motherboard.

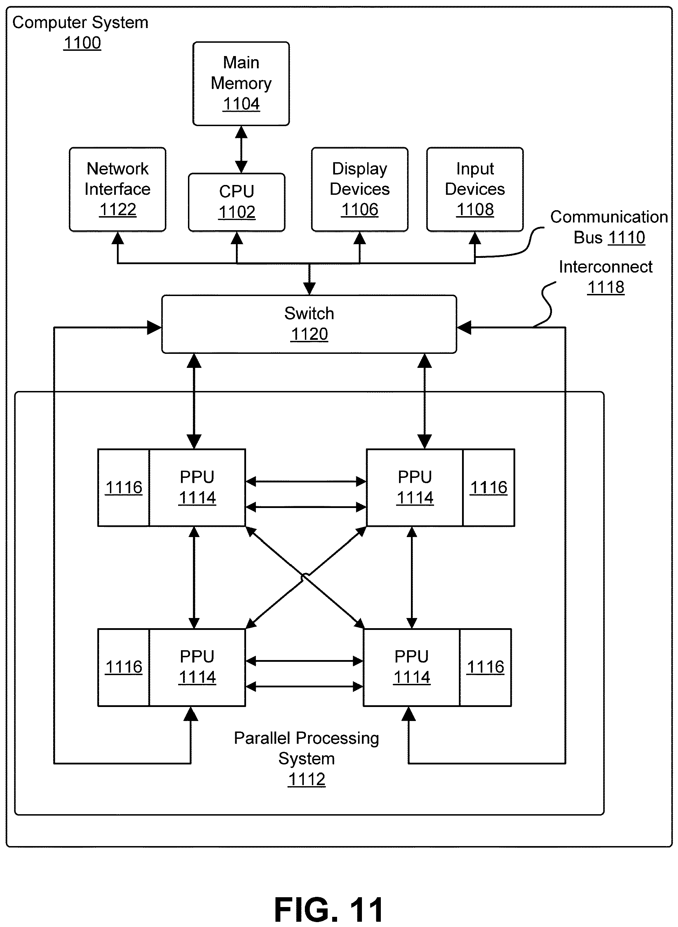

FIG. 11 illustrates a computer system 1100 in which the various architecture and/or functionality can be implemented, in accordance with one embodiment. The computer system 1100, in an embodiment, is configured to implement various processes and methods described throughout this disclosure.

In an embodiment, the computer system 1100 comprises at least one central processing unit 1102 that is connected to a communication bus 1110 implemented using any suitable protocol, such as PCI (Peripheral Component Interconnect), PCI-Express, AGP (Accelerated Graphics Port), HyperTransport, or any other bus or point-to-point communication protocol(s). In an embodiment, the computer system 1100 includes a main memory 1104 and control logic (e.g., implemented as hardware, software, or a combination thereof) and data are stored in the main memory 1104 which may take the form of random access memory ("RAM"). In an embodiment, a network interface subsystem 1122 provides an interface to other computing devices and networks for receiving data from and transmitting data to other systems from the computer system 1100.

The computer system 1100, in an embodiment, includes input devices 1108, the parallel processing system 1112, and display devices 1106 which can be implemented using a conventional CRT (cathode ray tube), LCD (liquid crystal display), LED (light emitting diode), plasma display, or other suitable display technologies. In an embodiment, user input is received from input devices 1108 such as keyboard, mouse, touchpad, microphone, and more. In an embodiment, each of the foregoing modules can be situated on a single semiconductor platform to form a processing system.

In the present description, a single semiconductor platform may refer to a sole unitary semiconductor-based integrated circuit or chip. It should be noted that the term single semiconductor platform may also refer to multi-chip modules with increased connectivity which simulate on-chip operation, and make substantial improvements over utilizing a conventional central processing unit ("CPU") and bus implementation. Of course, the various modules may also be situated separately or in various combinations of semiconductor platforms per the desires of the user.

In an embodiment, computer programs in the form of machine-readable executable code or computer control logic algorithms are stored in the main memory 1104 and/or secondary storage. Computer programs, if executed by one or more processors, enable the system 1100 to perform various functions in accordance with one embodiment. The memory 1104, the storage, and/or any other storage are possible examples of computer-readable media. Secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory.

In an embodiment, the architecture and/or functionality of the various previous figures are implemented in the context of the central processor 1102; parallel processing system 1112; an integrated circuit capable of at least a portion of the capabilities of both the central processor 1102; the parallel processing system 1112; a chipset (e.g., a group of integrated circuits designed to work and sold as a unit for performing related functions, etc.); and any suitable combination of integrated circuit.

In an embodiment, the architecture and/or functionality of the various previous figures is be implemented in the context of a general computer system, a circuit board system, a game console system dedicated for entertainment purposes, an application-specific system, and more. In an embodiment, the computer system 1100 may take the form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic.

In an embodiment, a parallel processing system 1112 includes a plurality of PPUs 1114 and associated memories 1116. In an embodiment, the PPUs are connected to a host processor or other peripheral devices via an interconnect 1118 and a switch 1120 or multiplexer. In an embodiment, the parallel processing system 1112 distributes computational tasks across the PPUs 1114 which can be parallelizable - for example, as part of the distribution of computational tasks across multiple GPU thread blocks. In an embodiment, memory is shared and accessible (e.g., for read and/or write access) across some or all of the PPUs 1114, although such shared memory may incur performance penalties relative to the use of local memory and registers resident to a PPU. In an embodiment, the operation of the PPUs 1114 is synchronized through the use of a command such as _syncthreads() which requires all threads in a block (e.g., executed across multiple PPUs 1114) to reach a certain point of execution of code before proceeding.

The specification and drawings are, accordingly, to be regarded in an illustrative rather than a restrictive sense. It will, however, be evident that various modifications and changes may be made thereunto without departing from the broader spirit and scope of the invention as set forth in the claims.

Other variations are within the spirit of the present disclosure. Thus, while the disclosed techniques are susceptible to various modifications and alternative constructions, certain illustrated embodiments thereof are shown in the drawings and have been described above in detail. It should be understood, however, that there is no intention to limit the invention to the specific form or forms disclosed, but on the contrary, the intention is to cover all modifications, alternative constructions, and equivalents falling within the spirit and scope of the invention, as defined in the appended claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. The use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but the subset and the corresponding set may be equal.

Conjunctive language, such as phrases of the form "at least one of A, B, and C," or "at least one of A, B and C," unless specifically stated otherwise or otherwise clearly contradicted by context, is otherwise understood with the context as used in general to present that an item, term, etc., may be either A or B or C, or any nonempty subset of the set of A and B and C. For instance, in the illustrative example of a set having three members, the conjunctive phrases "at least one of A, B, and C" and "at least one of A, B and C" refer to any of the following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, the term "plurality" indicates a state of being plural (e.g., "a plurality of items" indicates multiple items). The number of items in a plurality is at least two, but can be more when so indicated either explicitly or by context. Further, unless stated otherwise or otherwise clear from context, the phrase "based on" means "based at least in part on" and not "based solely on."

Operations of processes described herein can be performed in any suitable order unless otherwise indicated herein or otherwise clearly contradicted by context. In an embodiment, a process such as those processes described herein (or variations and/or combinations thereof) is performed under the control of one or more computer systems configured with executable instructions and is implemented as code (e.g., executable instructions, one or more computer programs or one or more applications) executing collectively on one or more processors, by hardware or combinations thereof. In an embodiment, the code is stored on a computer-readable storage medium, for example, in the form of a computer program comprising a plurality of instructions executable by one or more processors. In an embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In an embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause the computer system to perform operations described herein. The set of non-transitory computer-readable storage media, in an embodiment, comprises multiple non-transitory computer-readable storage media and one or more of individual non-transitory storage media of the multiple non-transitory computer-readable storage media lack all of the code while the multiple non-transitory computer-readable storage media collectively store all of the code. In an embodiment, the executable instructions are executed such that different instructions are executed by different processors - for example, a non-transitory computer-readable storage medium store instructions and a main CPU execute some of the instructions while a graphics processor unit executes other instructions. In an embodiment, different components of a computer system have separate processors and different processors execute different subsets of the instructions.

Accordingly, in an embodiment, computer systems are configured to implement one or more services that singly or collectively perform operations of processes described herein and such computer systems are configured with applicable hardware and/or software that enable the performance of the operations. Further, a computer system that implement an embodiment of the present disclosure is a single device and, in another embodiment, is a distributed computer system comprising multiple devices that operate differently such that the distributed computer system performs the operations described herein and such that a single device does not perform all operations.

The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Embodiments of this disclosure are described herein, including the best mode known to the inventors for carrying out the invention. Variations of those embodiments may become apparent to those of ordinary skill in the art upon reading the foregoing description. The inventors expect skilled artisans to employ such variations as appropriate and the inventors intend for embodiments of the present disclosure to be practiced otherwise than as specifically described herein. Accordingly, the scope of the present disclosure includes all modifications and equivalents of the subject matter recited in the claims appended hereto as permitted by applicable law. Moreover, any combination of the above-described elements in all possible variations thereof is encompassed by the scope of the present disclosure unless otherwise indicated herein or otherwise clearly contradicted by context.

All references, including publications, patent applications, and patents, cited herein are hereby incorporated by reference to the same extent as if each reference were individually and specifically indicated to be incorporated by reference and were set forth in its entirety herein.

In the description and claims, the terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout the specification terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In a similar manner, the term "processor" may refer to any device or portion of a device that processes electronic data from registers and/or memory and transform that electronic data into other electronic data that may be stored in registers and/or memory. As non-limiting examples, "processor" may be a Central Processing Unit (CPU) or a Graphics Processing Unit (GPU). A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. The terms "system" and "method" are used herein interchangeably insofar as the system may embody one or more methods and the methods may be considered a system.

In the present document, references may be made to obtaining, acquiring, receiving, or inputting analog or digital data into a subsystem, computer system, or computer-implemented machine. The process of obtaining, acquiring, receiving, or inputting analog and digital data can be accomplished in a variety of ways such as by receiving the data as a parameter of a function call or a call to an application programming interface. In some implementations, the process of obtaining, acquiring, receiving, or inputting analog or digital data can be accomplished by transferring the data via a serial or parallel interface. In another implementation, the process of obtaining, acquiring, receiving, or inputting analog or digital data can be accomplished by transferring the data via a computer network from the providing entity to the acquiring entity. References may also be made to providing, outputting, transmitting, sending, or presenting analog or digital data. In various examples, the process of providing, outputting, transmitting, sending, or presenting analog or digital data can be accomplished by transferring the data as an input or output parameter of a function call, a parameter of an application programming interface or interprocess communication mechanism.

Although the discussion above sets forth example implementations of the described techniques, other architectures may be used to implement the described functionality, and are intended to be within the scope of this disclosure. Furthermore, although specific distributions of responsibilities are defined above for purposes of discussion, the various functions and responsibilities might be distributed and divided in different ways, depending on circumstances.

Furthermore, although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

**1.** A processor comprising:
one or more arithmetic logic units, ALUs, to determine whether one or more features appear in at least a first and second image based, at least in part, on one or more neural networks including a discriminative portion and at least one encoder portion to encode information to be used by the discriminative portion.

**2.** The processor of claim 1, wherein the encoder portion encodes information indicative of appearance of the one or more features.

**3.** The processor of claim 1 or 2, wherein the one or more neural networks are jointly trained with a generative portion.

4. The processor of claim 3, wherein the generative portion comprises a second encoder portion to encode positional or geometric information.

5. The processor of claim 3 or 4, wherein the generative portion generates image data comprises a plurality of representations of the one or more features, each of the plurality of representations comprising a variation in appearance of the one or more features.

6. The processor of any of the preceding claims, wherein the one or more features comprise a person depicted in at least the first image.

7. A system comprising:
   one or more computers including one or more processors to train one or more neural networks to determine whether one or more features appear in at least a first and second image based, at least in part, on a generative portion and a discriminative portion and at least one encoder portion to encode information to be used by the generative and discriminative portions.

8. The system of claim 7, wherein the generative and discriminative portions are jointly trained, preferably wherein jointly training the generative and discriminative portions comprises minimizing generative and discriminative loss.

9. The system of claim 7 or 8, wherein the encoder portion is an appearance encoder to encode features associated with one or more of clothing, color, and texture.

10. The system of claim 7, wherein the generative portion
    comprises a structure encoder portion to encode features associated with one or more of size, pose, background, viewpoint, and lighting, and/or
    generates a plurality of images, wherein of the plurality of images comprise variations in appearance of the one or more features, and/or
    is trained to perform self-identity generation and cross-identity generation.

11. A machine-readable medium having stored thereon a set of instructions, which if performed by one or more processors, cause the one or more processors to at least:
    cause one or more neural networks including a generative portion and a discriminative portion to be trained to determine whether one or more features appear in at least a first and second image using encoded information about appearance and shape of the one or more features.

12. The machine-readable medium of claim 11, wherein the encoded information is generated by an encoder portion shared by the generative and discriminative portions.

13. The machine-readable medium of claim 11 or 12, having stored thereon a further set of instructions, which if performed by one or more processors, cause the one or more processors to at least train the generative and discriminative portions together.

14. The machine-readable medium of any of claims 11 to 13, wherein the generative portion comprises an appearance encoder to encode features associated with one or more of clothing, color, and texture.

15. The machine-readable medium of any of claims 11 to 14, wherein the generative portion
    comprises a structure encoder to encode features associated with one or more of size, pose, background, viewpoint, and lighting, and/or
    generates a plurality of images permitting the discriminative portion to be trained to recognize fine-grained identity features, and/or
    is trained to perform self-identity generation and cross-identity generation.

100

Image "A"
102

Image "B"
104

neural network
110

encoding
portion
116

discriminitive
portion
114

Yes ← same person? → No

106

## FIG. 1

input data for
training
202

200

input and
generated data
for training
204

generative
portion
212

structure
encoder
218

appearance
encoder
216

discriminitive
portion
214

neural network
210

# FIG. 2

FIG. 3

400

structure and
appearance
codes

$a_i$

$X_i$
402

$s_i$

$X_i^i$
406

$a_t$

$X_t$
404

$X_i^t$
408

# FIG. 4

structure and
appearance
codes
540

$a_i$

$X_i$
502

$s_i$

$X_j^i$

$s_j$

$X_j$
504

$a_j$

$X_i^j$

## FIG. 5

$X_i \ X_j$
602

$X_j^i \ X_i^j$
604

appearance
encoder
610

$f_{primary}$ 620

$L^s_{id}$

$L_{primary}$

$L^s_{id}$

$f_{fine}$ 622

$L_{fine}$

**FIG. 6**

Parallel Processing Unit (PPU) 700

Interconnect

702

I/O Unit
706

Front End Unit
710

Scheduler Unit
712

Work Distribution Unit
714

GPU Interconnect

708

Hub
716

GPC(X)
718

720

XBar

Memory
(Y)
704

Memory Partition Unit (U)
722

**FIG. 7**

To/From Xbar

General Processing
Cluster (GPC) 800

Pipeline Manager
802

PROP
804

MPC
810

Primitive
Engine
812

SM
814

DPC(V)
806

Raster Engine
808

WDX
816

MMU 818

To/From Xbar

To/From Xbar

**FIG. 8**

To/From
Xbar

Memory Partition Unit
900

Raster Operations Unit
902

L2 Cache
904

To/From
Xbar

Memory Interface
906

To/From
Memory

# FIG. 9

**FIG. 10**

**FIG. 11**

Europäisches
Patentamt

European
Patent Office

Office européen
des brevets

## EUROPEAN SEARCH REPORT

Application Number

EP 20 16 3864

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIXIAO GE ET AL: "FD-GAN: Pose-guided Feature Distilling GAN for Robust Person Re-identification", ARXIV.ORG, CORNELL UNIVERSITY LIBRARY, 201 OLIN LIBRARY CORNELL UNIVERSITY ITHACA, NY 14853, 6 October 2018 (2018-10-06), XP081433406, * sections 1, 3 and 4; figures 1-4; table 1 * ----- | 1-15 | INV. G06K9/00 G06K9/46 G06K9/62 |
| | | | TECHNICAL FIELDS SEARCHED (IPC) G06K |

The present search report has been drawn up for all claims

| Place of search | Date of completion of the search | Examiner |
|---|---|---|
| The Hague | 13 July 2020 | Atmatzidis, Lazaros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)